# FASCICULE DE BREVET EUROPEEN

(11) **EP 0 577 475 B1**
(45) Date de publication et mention de la délivrance du brevet: **24.09.1997**
(21) Numéro de dépôt: 93401629.6
(22) Date de dépôt: 24.06.1993
(51) Int. Cl.: C02F 1/78

(54) **Procédé de traitement, notamment d'eaux à potabiliser, à l'ozone; installation pour la mise en oeuvre du procédé**
Ozonaufbereitungsverfahren, insbesondere für Trinkwasserbereitung; Anlage zur Durchführung dieses Verfahrens
Ozone purification process, especially for the production of potable water; installation for carrying it out

(30) Priorité: 29.06.1992 FR 9207982
(43) Date de publication de la demande: 05.01.1994
(73) Titulaire: TRAILIGAZ" - COMPAGNIE GENERALE DE L'OZONE, 95140 Garges-Les-Gonesse (FR)
(72) Inventeur: Martin, Nathalie, F-75013 Paris (FR); Serpry, Philippe, Cincinatti, Ohio 45236 (US)
(74) Mandataire: Polus, Camille

(56) Documents cités:
- CH-A- 662 553
- US-A- 4 352 740
- PATENT ABSTRACTS OF JAPAN vol. 13, no. 69 (C-569)16 Février 1989

## Description

La présente invention concerne le traitement à l'ozone notamment d'un fluide, notamment d'eaux à potabiliser.

Les procédés classiques d'ozonation comprennent l'injection sous pression d'un gaz contenant de l'ozone dans un réacteur ou cuve de traitement contenant par exemple le fluide à traiter, les gaz non dissous étant récupérés au niveau des évents de colonne, et rejetés dans l'atmosphère après destruction éventuelle de l'ozone, ou sont recyclés.

Ces procédés sont par exemple mis en oeuvre de manière classique avec un système de diffusion du type colonne à bulles à diffuseurs poreux. Le débit du gaz injecté entraîne une homogénéisation des concentrations de gaz dissous.

On connaît en outre un procédé dans lequel un recyclage du gaz est effectué entre la sortie d'un contacteur et l'entrée de l'ozoneur, afin de limiter les coûts d'exploitation. Après destruction de l'ozone contenu dans l'air puis dessiccation, le gaz est renvoyé dans l'ozoneur où se fait un apport d'oxygène frais.

Un inconvénient de ce procédé est que le gaz refoulé au niveau des évents du réacteur ne contient pas uniquement de l'oxygène et de l'ozone, mais également entre autres de l'azote et de l'eau. Le problème qui se posait alors était la nécessité de travailler à forte concentration en oxygène ; cela impliquait alors des débits de purge non négligeables. Ces débits de purge dépendent des gaz absorbés ou désorbés à la sortie du réacteur.

CH 662 553 décrit également un procédé de purification d'eau potable par ozonation. Ce procédé, qui vise à minimiser le coût de production de l'eau, se caractérise par le fait que l'ozone est ajouté au réacteur d'ozonation en solution dans de l'eau (éventuellement déjà traitée par ozonation) préalablement enrichie en oxygène.

L'efficacité de ce procédé est liée à la teneur élevée en oxygène de l'eau ozonée introduite dans le réacteur et à sa faible teneur en azote.

Cependant, ce procédé nécessite une étape supplémentaire de purification de l'eau par élimination de l'azote qu'elle contient. En outre, ce procédé ne résout pas le problème d'une meilleure répartition de l'ozone dans le réacteur d'ozonation.

US-4 352 740 décrit un procédé d'ozonation d'un flux d'eau dans lequel on envoie dans l'ozoneur un gaz comportant au moins 70 % d'oxygène générant une teneur en ozone de l'ordre de 4 à 8%, puis on injecte le gaz ainsi obtenu dans les eaux usées et on libère dans l'atmosphère le gaz appauvri en ozone à la sortie du réacteur de traitement du flux d'eau, après passage dans un destructeur d'ozone.

Du fait de la forte concentration en oxygène et en ozone du gaz à l'entrée du réacteur de traitement de l'eau, l'inconvénient de ce procédé consiste en ce que le débit du gaz d'ozonation est très faible par rapport au débit du fluide à traiter, ce qui ne permet pas d'obtenir une diffusion homogène du gaz d'ozonation dans le fluide à traiter, donc un bon mélange du fluide et du gaz, en particulier lorsque l'on utilise des colonnes d'ozonation classique de l'eau, du type colonne à bulles, et de ce fait ne permet pas de réaliser un traitement optimisé du fluide.

La présente invention permet de conserver les avantages du procédé décrit dans US-4 352 370 tout en remédiant aux inconvénients mentionnés.

L'invention a ainsi pour objet un procédé de traitement à l'ozone, notamment d'un fluide tel que des eaux à potabiliser dans un réacteur, notamment une colonne à bulles, dans lequel on génère de l'ozone dans un gaz enrichi en oxygène contenant au moins 70% d'oxygène en volume, pour produire un gaz ozoné contenant plus de 2% et notamment de 2 à 20% d'ozone en poids, caractérisé en ce qu'on dilue au moyen d'un fluide annexe gazeux ledit gaz ozoné, et on effectue le traitement au moyen du gaz ozoné dilué.

Dans une première variante de réalisation du procédé selon l'invention, le fluide annexe comprend essentiellement une partie ou la totalité du gaz d'évent dudit réacteur.

On obtient ainsi un fluide ozoné recyclé enrichi en ozone par l'apport de gaz ozoné frais.

Avantageusement, dans cette variante, une partie du gaz d'évent du réacteur est recyclé pour diluer le gaz ozoné, le reste de ce gaz d'évent étant évacué de l'installation, de préférence après traitement par un destructeur d'ozone.

Dans une seconde variante de réalisation du procédé selon l'invention, le fluide annexe consiste essentiellement en un gaz non ozoné, notamment de l'air atmosphérique.

L'invention a également pour objet une installation de traitement à l'ozone, notamment d'eaux à potabiliser, comprenant un ozoneur générant un gaz ozoné, au moins un réacteur de traitement dudit fluide et une conduite d'alimentation reliant la sortie de l'ozoneur à l'entrée du réacteur, caractérisée en ce qu'elle comporte en outre des moyens d'injection d'un fluide annexe gazeux dans ladite conduite d'alimentation.

On décrira ci-après plus en détail l'invention en se référant aux figures annexées sur lesquelles:
- la Fig. 1 représente le schéma d'une installation pour la mise en oeuvre du procédé selon l'invention dans lequel le fluide annexe comprend essentiellement du gaz d'évent du réacteur d'ozonation;
- la Fig. 2 représente le schéma d'une installation du même type que précédemment dans laquelle sont prévus des moyens de mise sous pression du réacteur d'ozonation;
- la Fig. 3 représente le schéma d'une installation pour la mise en oeuvre du procédé selon l'invention, dans lequel le fluide annexe est de l'air atmosphérique.

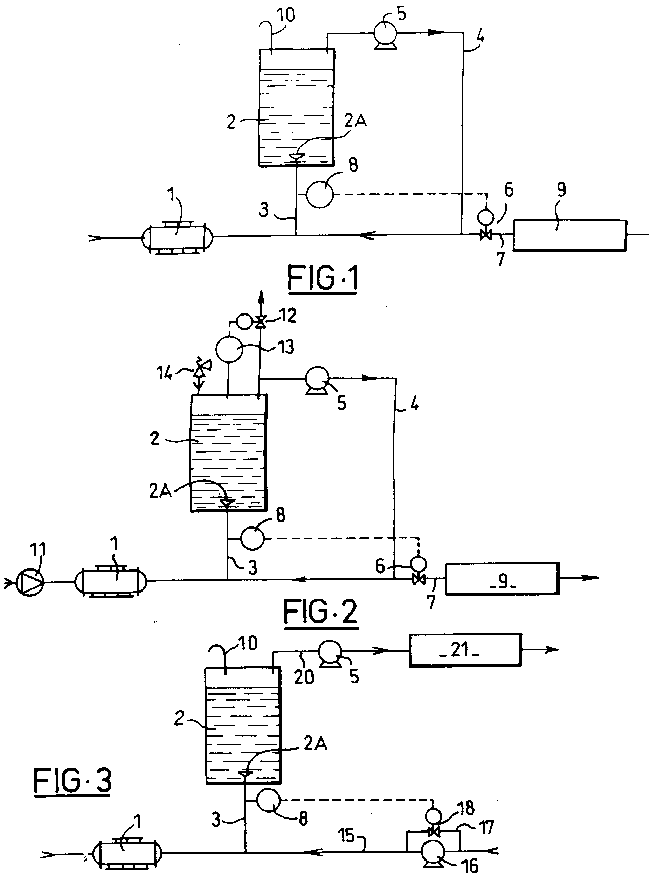

Les installations représentées aux Fig. 1 à 3 sont mises en oeuvre notamment pour la désinfection d'eaux à potabiliser.

Dans les installations illustrées, l'ozoneur fonctionne à débit fixe.

L'installation représentée à la Fig. 1 comprend un ozoneur 1 dont l'entrée est reliée à une source d'oxygène, par exemple un séparateur d'air, non représenté, fonctionnant par exemple selon le principe de l'adsorption à pression variable (Pressure Swing Adsorption ou PSA).

La sortie de l'ozoneur 1 est d'autre part reliée à l'entrée d'un réacteur d'ozonation 2, constitué par une colonne à bulles, au moyen d'une conduite d'alimentation 3.

La colonne à bulles consiste par exemple en une cuve fermée en béton comportant quatre à cinq compartiments contenant le fluide à traiter.

L'installation comprend également des moyens d'injection de gaz d'évent du réacteur, comprenant des moyens de recyclage d'une partie du gaz d'évent qui comportent une conduite 4 reliant le sommet du réacteur 2 à la conduite d'alimentation 3 et équipée d'un organe de pompage 5 fonctionnant à vitesse constante.

L'installation représentée à la Fig. 1 comprend en outre une vanne 6, prévue dans une conduite d'évacuation 7 de l'excès du gaz d'évent. Cette vanne est pilotée par un organe 8 de contrôle du débit de gaz entrant dans le réacteur 2, disposé à l'entrée de ce réacteur.

La conduite d'évacuation 7 est équipée d'un destructeur d'ozone 9.

La colonne d'ozonation 2 comprend en outre une crosse 10 de maintien de la pression atmosphérique dans le réacteur 2.

Dans l'installation représentée, de l'air enrichi en oxygène contenant au moins 70% d'oxygène, fourni par exemple par le séparateur d'air non représenté, est envoyé dans l'ozoneur 1, où est généré de l'ozone à partir de l'oxygène du gaz d'alimentation. Le gaz quittant l'ozoneur 1 a une teneur en ozone supérieure à 2% en poids, comprise notamment entre 2 et 20% en poids.

Au flux de gaz ozoné sortant de l'ozoneur 1 est additionné, un flux de gaz annexe consistant en une partie du gaz d'évent du réacteur 2, recyclée au moyen de l'organe de pompage 5 à travers la conduite 4.

Les deux débits de gaz rassemblés constituant le gaz ozoné dilué, sont envoyés dans le réacteur 2, où ils sont mis au contact des eaux usées à traiter circulant dans le réacteur 2 grâce à un ou plusieurs diffuseurs appropriés 2A.

Une partie du volume du gaz ozoné dilué, par exemple 20 à 30% de ce gaz, se dissout dans les eaux usées à traiter où se produisent des phénomènes d'absorption et de désorption de gaz.

A la sortie du réacteur 2, on récupère ainsi un flux de gaz appauvri en ozone et ayant un débit légèrement inférieur à celui entrant dans le réacteur.

Une partie de ce flux de gaz est recyclée et constitue le fluide annexe de dilution du gaz ozoné sortant de l'ozoneur 1.

L'excès du flux de gaz d'évent est évacué par la conduite d'évacuation 7 et libéré dans l'atmosphère après destruction de l'ozone dans le destructeur d'ozone 9.

Si le débit de gaz sortant de l'ozoneur 1 varie, le débit du gaz annexe est automatiquement ajusté au moyen de la vanne 6, pilotée par l'organe de contrôle du débit 8 qui détermine le débit total du flux contenant l'oxygène, l'ozone et le gaz annexe recyclé. La vanne 6 permet l'évacuation d'une quantité de gaz annexe plus ou moins grande selon que le débit de gaz au niveau du moyen de contrôle du débit 8 est diminué ou augmenté.

En cas de surpression accidentelle dans le réacteur 2, la crosse 10 laisse échapper l'excès de gaz dans l'atmosphère, alors qu'en cas de dépression, de l'air atmosphérique peut entrer par la crosse 10 et rétablir la pression atmosphérique dans le réacteur 2.

A titre d'exemple, les débits de gaz peuvent être les suivants :
- débit de gaz à la sortie de l'ozoneur : 100 Nm³/h, à une concentration en ozone de 10%,
- débit de gaz à l'entrée du réacteur : 1000 Nm³/h, à une concentration en ozone de 1%,
- débit de gaz à la sortie du réacteur : 800 Nm³/h, à faible concentration d'ozone,
- débit de gaz atmosphérique d'appoint : 100 Nm³/h à travers le réacteur.

En variante, l'installation représentée à la Fig. 1 comporte des moyens du type Venturi pour l'addi-tion des deux flux de gaz.

L'installation représentée à la Fig. 2 est du même type que celle de la Fig. 1 mais comporte en outre des moyens de mise sous pression du réacteur 2.

Ainsi, l'installation comprend un compresseur 11 disposé en amont (ou en variante en aval) de l'ozoneur 1 ainsi que des moyens de régulation de la pression du réacteur 2 constitués par une vanne 12 d'échappement pilotée par un organe de contrôle 13 de la pression. Il est également prévu une soupape 14 de sécurité anti-dépression.

Lorsque la pression s'élève au-dessus de la pression souhaitée, la vanne 12 permet l'échappement de l'excès de gaz, tandis que lorsqu'une dépression accidentelle se produit dans le réacteur, de l'air atmosphérique entre par la soupape 14 pour éviter le maintien du réacteur en dépression.

On peut en outre prévoir un destructeur d'ozone, non représenté, à la sortie de la vanne 12, afin de rejeter dans l'atmosphère un gaz ne contenant plus d'ozone, ou de l'ozone à l'état de traces.

L'installation représentée à la Fig. 2 fonctionne de la même façon que celle de la Fig. 1, hormis le fait que le réacteur, le gaz ozoné, le gaz ozoné dilué ainsi que le gaz d'évent sont sous pression.

Dans le dispositif représenté, le réacteur est mis sous pression par l'intermédiaire d'un compresseur. Toutefois l'ozoneur peut, pour atteindre le même résultat, être relié à une source de gaz enrichi en oxygène elle-même sous pression, telle qu'un réservoir de stockage.

L'installation représentée à la Fig. 3 comprend, comme précédemment, un ozoneur 1, un réacteur d'ozonation 2, et une conduite d'alimentation 3 reliant l'ozoneur 1 à l'entrée du réacteur 2 et équipée d'un organe 8 de contrôle du débit de gaz ozoné dilué disposé à l'entrée du réacteur 2.

Le gaz ozoné sortant de l'ozoneur 1 par la conduite d'alimentation 3 est ici dilué au moyen d'air atmosphérique amené par une conduite d'admission 15 équipée d'un organe de pompage 16 d'air atmosphérique fonctionnant à vitesse constante.

Afin de réguler le débit de l'air atmosphérique, les bornes de l'organe de pompage 16 sont reliées par un by-pass 17 comportant une vanne 18 pilotée par l'organe 8.

Dans cette installation, le gaz d'évent est aspiré par l'organe de pompage 5 à travers une conduite d'évacuation 20 et libéré dans l'atmosphère après passage dans un destructeur d'ozone 21 qui est plus largement dimensionné que le destructeur d'ozone 9 représenté aux Fig. 1 et 2, dans la mesure où il doit traiter la totalité du débit de gaz d'évent.

En variante, dans les installations des Fig. 1, 2 et 3, les organes de pompage pourraient être à vitesse variable, les moyens de régulation du flux de gaz annexe étant alors modifiés en conséquence.

Dans le cas où le procédé selon l'invention s'applique à un fluide, celui-ci peut consister en un mélange, par exemple de l'eau brute additionnée de peroxyde d'hydrogène.

Le procédé selon l'invention a pour avantage de permettre la génération d'ozone fortement concentré assurant ainsi un rendement optimal de l'ozoneur, tout en assurant une bonne homogénéisation du gaz dissous dans le fluide à traiter grâce à l'ajout d'un débit de gaz annexe réglable au débit de gaz fourni par l'ozoneur.

## Revendications

1. Procédé de traitement, notamment d'eaux à potabiliser, à l'ozone dans un réacteur (2), notamment une colonne à bulles, dans lequel on génère (en 1) de l'ozone dans un gaz enrichi en oxygène contenant au moins 70% d'oxygène en volume, pour produire un gaz ozoné contenant plus de 2%, notamment de 2 à 20% d'ozone en poids, caractérisé en ce qu'on dilue au moyen d'un fluide gazeux annexe ledit gaz ozoné, et on effectue le traitement au moyen du gaz ozoné dilué.

2. Procédé selon la revendication 1, caractérisé en ce que le fluide annexe comprend essentiellement une partie ou la totalité du gaz d'évent dudit réacteur (2).

3. Procédé selon la revendication 2, caractérisé en ce qu'une partie du gaz d'évent du réacteur (2) est recyclé pour diluer le gaz ozoné, le reste de ce gaz d'évent étant évacué de l'installation.

4. Procédé selon la revendication 3, caractérisé en ce que le gaz d'évent évacué est traité par un destructeur d'ozone (9).

5. Procédé selon la revendication 1, caractérisé en ce que le fluide annexe est un gaz non ozoné, notamment de l'air atmosphérique.

6. Installation pour la mise en oeuvre du procédé selon l'une quelconque des revendications précédentes, comprenant un ozoneur (1) générant un gaz ozoné, au moins un réacteur (2) de traitement à l'ozone, et une conduite d'alimentation (3) reliant la sortie de l'ozoneur à l'entrée du réacteur, caractérisée en ce qu'elle comporte en outre des moyens (4,5; 15,16) d'injection d'un fluide annexe gazeux dans ladite conduite d'alimentation (3).

7. Installation selon la revendication 6, caractérisée en ce que les moyens d'injection dudit fluide annexe dans ladite conduite d'alimentation (3) comprennent des moyens (4, 5) de recyclage d'une partie du gaz d'évent du réacteur (2).

8. Installation selon la revendication 6, caractérisée en ce que les moyens d'injection dudit fluide annexe dans ladite conduite d'alimentation (3) comprennent une conduite (15) d'admission de gaz annexe, notamment d'air atmosphérique, équipée d'un organe (16) de pompage d'air atmosphérique.

9. Installation selon la revendication 7 ou 8, caractérisée en ce qu'elle comprend en outre des moyens de régulation du débit du fluide annexe comportant une vanne (6; 18) pilotée par un organe (8; 19) de contrôle du débit de gaz ozoné dilué, situé à l'entrée du réacteur (2).

10. Installation selon les revendications 7 et 9 prises ensemble, caractérisée en ce que ladite vanne pilotée (6) est prévue dans une conduite (7) d'évacuation de l'excès de gaz d'évent, notamment équipée d'un destructeur d'ozone (9).

11. Installation selon les revendications 8 et 9 prises ensemble, caractérisée en ce que ladite vanne pilotée (18) est prévue dans un by-pass (17) reliant les bornes de l'organe (16) de pompage du gaz annexe, notamment de l'air atmosphérique.

12. Installation selon l'une quelconque des revendications 6 à 11, caractérisée en ce qu'elle comporte des moyens de mise sous pression du réacteur, des moyens de régulation de la pression du réacteur comprenant une vanne (12) d'échappement pilotée par un organe (13) de contrôle de la pression, et une soupape (14) de sécurité anti-dépression.

## Claims

1. Treatment process, especially for treating water to drinking quality, using ozone in a reactor (2), particularly a bubble column, wherein the ozone is generated (at 1) in an oxygen-enriched gas containing at least 70% by volume of oxygen, to produce an ozonised gas containing more than 2%, especially 2 to 20 % by weight of ozone, characterised in that the ozonised gas is diluted by means of a related gaseous fluid, and the treatment is carried out using the dilute ozonised gas.

2. Process according to claim 1, characterised in that the related fluid comprises essentially some or all of the vent gas from said reactor (2).

3. Process according to claim 2, characterised in that some of the vent gas from the reactor (2) is recycled to dilute the ozonised gas, the remainder of this vent gas being evacuated from the installation.

4. Process according to claim 3, characterised in that the evacuated vent gas is treated with an ozone destroyer (9).

5. Process according to claim 1, characterised in that the related fluid is a non-ozonised gas, particularly atmospheric air.

6. Installation for carrying out the process according to any one of the preceding claims, comprising an ozoniser (1) generating an ozonised gas, at least one ozone treatment reactor (2) and a supply duct (3) connecting the exit from the ozoniser to the entrance to the reactor, characterised in that it further comprises means (4, 5; 15, 16) for injecting a related gaseous fluid into said supply duct (3).

7. Installation according to claim 6, characterised in that the means for injecting said related fluid into said supply duct (3) comprise means (4, 5) for recycling some of the vent gas from the reactor (2).

8. Installation according to claim 6, characterised in that the means for injecting said related fluid into said supply duct (3) comprise an intake duct (15) for related gas, notably atmospheric air, fitted with means (16) for pumping atmospheric air.

9. Installation according to claim 7 or 8, characterised in that it further comprises means for regulating the flow of the related fluid, comprising a valve (6; 18) controlled by means (8; 19) for monitoring the flow rate of dilute ozonised gas, positioned at the entrance to the reactor (2).

10. Installation according to claims 7 and 9 taken together, characterised in that the controlled valve (6) is provided in a duct (7) for evacuating the excess vent gas, said duct being equipped in particular with an ozone destroyer (9).

11. Installation according to claims 8 and 9 taken together, characterised in that the controlled valve (18) is provided in a bypass (17) connecting the terminals of the means (16) for pumping the related gas, notably atmospheric air.

12. Installation according to any one of claims 6 to 11, characterised in that it comprises means for pressurising the reactor, means for regulating the reactor pressure comprising an exhaust valve (12) controlled by pressure monitoring means (13), and an anti-pressure-loss safety valve (14).

## Patentansprüche

1. Verfahren zur Ozonbehandlung, insbesondere zur Trinkwasseraufbereitung, in einem Reaktor (2), insbesondere einer Blasensäule, bei dem man (bei 1) Ozon in einem mit Sauerstoff angereicherten Gas erzeugt, das wenigstens 70 Vol.% Sauerstoff enthält, um ein ozoniertes Gas zu erzeugen, das mehr als 2 %, insbesondere 2 bis 20 Gew.% Ozon enthält, dadurch gekennzeichnet, daß man dieses ozonierte Gas mit Hilfe eines gasförmigen Zusatzfluids (fluide annexe) verdünnt und die Behandlung mit Hilfe des verdünnten ozonierten Gases ausführt.

2. Verfahren nach Anspruch 1, dadurch gekennzeichnet, daß das Zusatzfluid im wesentlichen einen Teil oder die Gesamtheit des Abgases des Reaktors (2) enthält.

3. Verfahren nach Anspruch 2, dadurch gekennzeichnet, daß ein Teil des Abgases des Reaktors (2) rezirkuliert wird, um das ozonierte Gas zu verdünnen, während der Rest des Abgases aus der Anlage abgezogen wird.

4. Verfahren nach Anspruch 3, dadurch gekennzeichnet, daß das abgezogene Abgas mit einem Ozonzerstörer (9) behandelt wird.

5. Verfahren nach Anspruch 1, dadurch gekennzeichnet, daß das Zusatzfluid ein nicht ozoniertes Gas, insbesondere Atmosphärenluft ist.

6. Anlage zur Durchführung des Verfahrens nach einem der vorstehenden Ansprüche, mit einem Ozonerzeuger (1), der ein ozoniertes Gas erzeugt, wenigstens einem Reaktor (2) zur Ozonbehandlung und einer Zufuhrleitung (3), die den Ausgang des Ozonerzeugers mit dem Eingang des Reaktors verbindet, dadurch gekennzeichnet, daß sie außerdem Mittel (4, 5; 15, 16) zur Injektion eines gasförmigen Zusatzfluids in die Zufuhrleitung (3) aufweist.

7. Anlage nach Anspruch 6, dadurch gekennzeichnet, daß die Mittel zur Injektion des Zusatzgases in die Zufuhrleitung (3) Mittel (4, 5) zum Rezirkulieren eines Teils des Abgases des Reaktors (2) umfassen.

8. Anlage nach Anspruch 6, dadurch gekennzeichnet, daß die Mittel zur Injektion des Zusatzgases in die Zufuhrleitung (3) eine Leitung (15) zur Einleitung von Zusatzgas, insbesondere Atmosphärenluft, umfassen, die mit einem Pumporgan (16) für Atmosphärenluft versehen ist.

9. Anlage nach Anspruch 7 oder 8, dadurch gekennzeichnet, daß sie außerdem Mittel zur Einstellung des Durchsatzes des Zusatzfluids aufweist, die ein Ventil (6; 18) umfassen, das durch ein am Eingang des Reaktors (2) angeordnetes Organ (8; 19) zur Steuerung des Durchsatzes des verdünnten ozonierten Gases vorgesteuert ist.

10. Anlage nach den Ansprüchen 7 und 9 in Kombination, dadurch gekennzeichnet, daß das vorgesteuerte Ventil (6) in einer Abzugsleitung (7) für das überschüssige Abgas angeordnet ist, die insbesondere mit einem Ozonzerstörer (9) versehen ist.

11. Anlage nach den Ansprüchen 8 und 9 in Kombination, dadurch gekennzeichnet, daß das vorgesteuerte Ventil (18) in einem Bypass (17) vorgesehen ist, der die Anschlüsse des Pumporgans (16) für das Zusatzgas, insbesondere die Atmosphärenluft, verbindet.

12. Anlage nach einem der Ansprüche 6 bis 11, dadurch gekennzeichnet, daß sie Mittel zur Erzeugung eines Druckes in dem Reaktor, Mittel zur Einstellung des Reaktordruckes mit einem durch ein Drucksteuerorgan (13) vorgesteuerten Ablaßventil (12) und ein unterdruckverhinderndes Sicherheitsventil (14) aufweist.
